(19) Europäisches Patentamt
European Patent Office
Office européen des brevets

(11) **EP 4 560 554 A1**

(12) **EUROPEAN PATENT APPLICATION**

(43) Date of publication:
**28.05.2025  Bulletin 2025/22**

(21) Application number: **23211140.1**

(22) Date of filing: **21.11.2023**

(51) International Patent Classification (IPC):
*G06Q 20/06* (2012.01)    *G06Q 20/36* (2012.01)
*G06Q 20/38* (2012.01)    *H04L 9/32* (2006.01)

(52) Cooperative Patent Classification (CPC):
**G06Q 20/3829; G06Q 20/065; G06Q 20/0655;**
**G06Q 20/3678; G06Q 20/3823; H04L 9/3247;**
H04L 2209/56

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Giesecke+Devrient advance52 GmbH**
**81677 München (DE)**

(72) Inventors:
• **ZELLER, Peter**
  **81677 München (DE)**
• **HUPEL, Lars**
  **81677 München (DE)**
• **MAKAN, Rafiee**
  **10777 Berlin (DE)**

(74) Representative: **Ter Meer Steinmeister & Partner**
**Patentanwälte mbB**
**Nymphenburger Straße 4**
**80335 München (DE)**

Remarks:
Amended claims in accordance with Rule 137(2)
EPC.

(54) **SECURE TOKEN TRANSACTION UNIT, PAYMENT TRANSACTION SENDER, RECEIVER AND SYSTEM, AND METHOD OF PROVIDING A NON-REPUDIABLE PAYMENT TRANSACTION BETWEEN PARTICIPANTS IN AN ELECTRONIC PAYMENT TRANSACTION SYSTEM**

(57)    The invention relates to a secure token transaction unit, such as a wallet, hosted within a service provider unit, within an electronic payment transaction system comprising a token reference register, the secure token transaction unit configured to send a token to another token transaction unit or to receive a token from another token transaction unit within the electronic payment transaction system, the secure token transaction unit comprising a control module adapted to perform a dual key control mechanism, wherein the dual key control mechanism thereby enhancing the security that the payment transaction cannot be tampered with, to enable a non-repudiable proof of the payment transaction.

Fig. 2

**Description**

The invention relates to a secure token transaction unit within an electronic payment transaction system. The invention also relates to a service provider unit designed as a payment transaction sender and a service provider unit designed as a payment transaction receiver within an electronic payment transaction system. The invention also relates to a payment transaction system. The invention also relates to a method of providing a non-repudiable payment transaction between participants in an electronic payment transaction system.

A token can represent a digital asset, such as a digital asset, electronic coin, coin data set value note, in particular a digital currency, preferably a central bank digital currency, in short CBDC.

There are different technical approaches for exchanging electronic tokens.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach, as for instance described in WO 2020 / 212 331 A1, tokens are stored in token transaction units (also called wallets or payment application units or secure elements) to be directly exchanged between users of an electronic payment transaction system. For security-, verification- and registrationpurposes, a central token reference register stores token references of all valid tokens without knowing the tokens itself. So, the user can check validity of a received token with dedicated requests send to the token reference register. The token reference register only stores token references of the corresponding token. Tokens can be further modified by each user of the token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

In the evolving world of digital finance, electronic payment systems have become increasingly central to global commerce. These systems typically involve a complex orchestration of devices and technologies that enable the secure and efficient transfer of funds. Computing, data communications and interface interactions all play a key role in facilitating seamless transactions. In essence, the goal is to simplify the digital payment process while ensuring high levels of security, efficiency, and user satisfaction.

Complex yet efficient communication protocols for electronic payment systems use advanced cryptographic techniques to ensure a high level of security. However, the protocols are not free of challenges. WO 2023/036458 A1 describes a transaction system in which participants carry out transactions using a unique protocol. This protocol ensures the seamless transfer of assets and/or information between parties. It uses cryptographic techniques to validate and authenticate transactions, ensuring the integrity and security of the process. However, while the system is powerful, it does not address potential fraud issues where participants may dispute a transaction, claiming it never occurred or has been altered, and the system may not have adequate measures to conclusively address such claims.

An electronic payment system is a secure digital system that facilitates the exchange of value or data between parties, i.e. participants in the electronic payment system, over a network. This may include financial systems for transferring money, e-commerce platforms for buying and selling goods, or any other system where digital transactions are carried out. These systems provide the necessary infrastructure to initiate, process and record token transactions. Examples include digital wallet platforms, online banking systems or blockchain-based payment networks.

A participant in/user of the electronic payment transaction system is associated with a technical entity such as a secure element, a terminal, a system, or a software program involved in the execution of electronic transactions of tokens. Preferably, the participant is a user within the transaction unit that is represented by a secure token transaction unit that is hosted at a Financial Service Provider (FSP). FSP also includes a service customer and a service provider entity. Participants interact with each other to perform token transactions such as electronic fund transfers.

For managing the tokens, such as performing token transactions and storing the tokens, secure token transaction units, also known as token management units, are used.

A secure token transaction unit may be referred to as a wallet, which is a digital container that stores information used to make payments, redeem rewards, or access other services. The secure token transaction unit may be a token transaction unit, which can be used to locally manage the token in a secure element itself, to modify the tokens and to register the token in the electronic transaction system.

The secure token transaction unit, also referred to as a secure account management unit, may be used to manage tokens in a decentralized ledger, such as a blockchain, or a centralized ledger, such as a database, that stores the token centrally in the electronic transaction system. The management, modification and/or registration of the tokens in the electronic transaction system may be initiated by the token transaction unit. The token transaction or token storage may be performed remotely by another secure element or a service provider unit.

The secure token transaction unit is preferably hosted at a service provider unit. There may be a plurality of wallets hosted by the service provider unit, each may be dedicated to one participant in the transaction unit. Such secure token transaction units are referred to as hosted wallets.

The secure token transaction unit may be hosted within a terminal device, such as a smart phone. There may be one or more wallets hosted within the terminal device, all of them may be dedicated to one participant in the transaction unit. Such secure token transaction units are referred to as device wallets. These device wallets may be software applications in an application runtime environment. Additional security features, such as a trusted execution environment (hardware or software) may be used. The terminal device may refer to a computing device such as a smartphone, laptop, mobile tablet, or, where applicable, a desktop or mainframe, which is connectable to other devices or networks. By means of the terminal device, the token transaction unit is in an operational state, which preferably means that the terminal provides the token transaction unit with the requirements necessary for the operation of the token transaction unit, such as power supply, physical housing, mechanical protection.

When it is referred to secure token transaction units herein, it is referred to hosted wallets or device wallets.

Token transaction units can be software-based or hardware-based and can be used to store a variety of information, including tokens, asset values, credit card numbers, loyalty card numbers, boarding pass numbers and other relevant data. A token transaction unit can be implemented as a software application, or as a hardware device, such as a USB drive or a smartcard / chipcard.

A service provider unit can be a financial service provider, such as a commercial bank or a fintech company. Additionally, a service provider unit can be an official authority or a mobile communication service provider unit. It can also be any other regulated or nonregulated party that participates in the electronic transaction system, including a payment transaction involving a central bank digital currency (CBDC) as authorized by the token issuing authority.

According to an aspect of the invention, a secure token transaction unit is provided within an electronic payment transaction system. The secure token transaction unit may be a hosted wallet, e.g. within a service provider unit, or a device wallet, hosted in a terminal device.

The token transaction unit may be connected or connectable to a terminal or a service provider unit. In particular, the token transaction unit is connectable to another transaction unit within the payment transaction system. In the present context, it is specifically connectable to a secure token transaction unit to perform payment transactions.

The secure token transaction unit is configured to send a token to another token transaction unit within the electronic payment transaction system, e.g. by means of the terminal device or the service provider unit. This secure token transaction unit is the sender of a token transaction within the payment token transaction system.

The secure token transaction unit may comprise a secure memory for storing data, such as tokens or transaction data.

A control module of the token transaction unit is adapted to perform a dual key control mechanism.

The dual key control mechanism comprises generating a unique cryptographic key pair comprising a private key and a public key, preferably by means of a random number generator. The private key is a secret and unique cryptographic key held by the secure token transaction unit, preferably stored in the secure memory. The public key is not kept secret but is exchanged between the communication parties involved.

The dual key control mechanism comprises receiving a public key from the other token transaction unit. This enables implementing the dual key control mechanism and enables sharing its benefits. The data transfers may be performed via communication interfaces between the token transaction unit and the terminal device/ service provider unit.

The dual key control mechanism comprises generating a replacement request including an input token reference uniquely assigned to a token of the secure token transaction unit and a combined token reference as an output token reference. The combined token reference includes a combined public key. The combined public key is a combination of the public key of the transaction unit and the public key of the other transaction unit.

With this replacement request, the transaction unit may request a switching of the input token reference to the combined token reference at the token reference register. Switching means replacing the input token reference to the combined token reference without any change on a monetary value of the token (reference). With a switching, the ownership of a monetary value (of a token) is changed from one participant to another participant within the payment transaction system.

With this replacement request, the transaction unit may request a splitting of the input token reference into the combined token reference at the token reference register. Here, the splitting means replacing the input token reference with the combined token reference without any change on a monetary value of the token (reference). With a splitting, the ownership of a monetary value (of a token) is changed to another participant.

With this replacement request, the transaction unit may use a variant of the switching/ splitting where payment is made on two token references. So, it is not switched on a sum of token references but on the pair, each resulting in a combined token reference.

A combined public key is the result of the combination of two public keys, here the public key of the transaction unit and the public key of the second transaction unit. The combination can be any logical linking, such as an addition, a concatenation, or a logical operation.

Within the dual key control mechanism, the replacement request is provided to the token reference register.

Each public key has a corresponding private key and both public key and private key are a cryptographic key pair.

The chosen combination to create the combined public key may be the same for combining the respective private keys, here the private key of the transaction unit and the private key of the second transaction unit.

Each transaction unit or the service provider unit that hosts the transaction unit or the device terminal that hosts the transaction unit may further comprise a transmission key pair having a transmission public key and a transmission private key as a signing key pair. Each transfer between participants may be signed by the transmission private key from the sender or the receiver. This ensures that all direct transfer messages between participants are digitally signed which provides an additional security guarantee (e.g., when an attacker obtains access to a transport layer certificate and may change information) and it provides a more robust implementation of the transfer protocol (no if/else on code level, because the signature can now be checked).

The dual key control mechanism can thus contribute to provide enhanced security that the transaction cannot be tampered with to provide non-repudiable proof of the transaction. By replacing the input token reference with the combined token reference, neither the transaction unit nor the other transaction unit can spend a token that is assigned to this combined token reference. This is caused by the dual key control mechanism, in which at the time of registration of the combined token reference, none of the transaction units knows the respective combined private key - although each of them knows parts thereof, none of the transaction units can prove ownership of the token assigned to the respective combined token reference as registered in the token reference register.

The public key received from the other transaction unit is digitally signed using a transmission private key of the other transaction unit or a transmission private key of a service provider unit. Such a signature provides proof of the origin of the public key from the (receiving) other transaction unit.

According to an aspect, a secure token transaction unit, such as a wallet, hosted within a service provider unit or a device terminal within an electronic payment transaction system (comprising a token reference register) is configured to receive a token from another token transaction unit within the electronic payment transaction system. This secure token transaction unit is the receiver of a token transaction within the payment token transaction system.

This secure token transaction unit comprising a control module adapted to perform a (the other part of the) dual key control mechanism comprising generating a unique cryptographic key pair comprising a private key and a public key, preferably by means of a random number generator, sending the public key to the other transaction unit, receiving from the other secure token transaction unit, a token reference register acknowledgement confirming that the token reference register has i) verified the authenticity and correctness of a combined token reference, and ii) replaced an input token reference with the combined token reference in its records, the acknowledgement serving as a non-repudiable proof of transaction.

The dual key control mechanism (for this transaction unit) further comprise receiving a private key from the other transaction unit to enable generating a combined private key, wherein the combined private key is a combination of the private key generated by the secure token transaction unit and the private key received from the other token transaction unit to control the monetary value associated with the combined token reference. The combination can be any logical linking, such as an addition, a concatenation, or a logical operation. The chosen combination to create the combined private key may be the same for combining the respective public keys, here the public key of the transaction unit and the public key of the second transaction unit.

Prior to sending the public key, the public key is digitally signed using a transmission private key of the other transaction unit or a transmission private key of a service provider unit.

The dual key control mechanism may further comprise receiving from the other transaction unit a proof of payment comprising the acknowledgement of the token reference register, an acknowledgement signature, preferably being a digital signature by using a transmission private key of the token transaction unit and more preferably at least one of i) transaction data, and ii) the combined token reference, and validating the authenticity and integrity of the acknowledgement of the token reference register, preferably by verifying the acknowledgement signature by means of a transmission public key of the other secure transaction unit.

According to an aspect of the invention, a service provider unit is provided that is configured to host a plurality of second secure token transaction units.

The service provider unit may further comprise a secure memory for storing data, a control module, such as a processor, microprocessor, or microcontroller, preferably for performing its own operations or controlling operations of other hardware or software components within the transaction unit, a communication module, and a secure memory.

The acknowledgement contributes to the implementation of the dual key control mechanism, serving as a non-repudiable proof of transaction.

The dual key control mechanism further comprises receiving an acknowledgement from the token reference register in case, the combined token reference is registered within the token reference register successfully, the acknowledgement preferably comprising i) transaction data such as at least one of transaction ID, reference number, timestamp, and/or ii) a digital signature on the combined token reference and/or the replacement request.

The acknowledgement of the token reference register confirms that the token reference register has i) verified the authenticity and correctness of the combined token reference, and ii) replaced the input token reference with the combined token reference in its records, thereby providing indisputable evidence of the transaction.

The dual key control mechanism may further comprise: providing the private key to the second transaction unit, thereby enabling the second transaction unit to generate a combined private key to control the monetary value associated with the combined public key via the combined token reference

The dual key control mechanism may further comprise generating a digital signature on the combined token reference by means of the transmission private key of the secure token transaction unit, and/or via providing the digital signature of the combined token reference.

The dual key control mechanism may further comprise receiving transaction data that comprise at least one of a transfer ID, sender wallet ID, recipient wallet ID, and timestamp.

The dual key control mechanism may further comprise generating the combined token reference that preferably comprises the monetary value, the combined public key and optionally the transaction data.

Preferably, the token reference is a publicly available reference to a token, and is described at least by the public key corresponding to the private key, and v is the denomination, monetary value or amount of the token. The public key may be determined using a cryptographic function, using a generator point within elliptic curve cryptography. The token reference serves as a public proof of the existence and value of a specific token without revealing the private key required to spend it.

The token reference can be understood as a public cryptographic representation or identifier of a specific value or asset, i.e., a specific amount of digital currency.

Preferably, the token comprises a private key known only to the owner, and a monetary value. The private key grants ownership / control over the associated monetary value.

According to an aspect of the invention, an electronic payment transaction system is provided. The system comprises at least one terminal or service provider unit designed as a sender of payment transactions as described above, and at least one terminal or service provider unit designed as a receiver of payment transactions as described above.

According to an aspect of the invention, a method is provided for providing a non-repudiable payment transaction between participants in an electronic payment transaction system. The participants include at least one sender (preferably a transaction unit or a service provider unit or a terminal device) and at least one receiver (preferably a transaction unit or a service provider unit or a terminal device) of payment transactions.

The method defines a transaction protocol and comprises a set or sequence of steps described below.

The sender performs:

- generating a sender key pair comprising a sender private key and a sender public key.

The receiver performs:

- generating a receiver key pair comprising a receiver private key and a receiver public key,
- optionally, digitally signing the receiver public key with a transmission private key of the receiver, and
- sending to the sender the (signed) receiver public key.

The sender performs:

- switching an input token reference to a combined token reference including the monetary value and a combined public key comprising the sender public key and the receiver public key by generating a replacement request, and
- sending the replacement request including the combined token reference to the token reference register.

The token reference register performs:

- verifying the combined token reference and,
- in case of a positive verification result, replacing the input token reference in the register by the combined token reference,
- generating an acknowledgement, preferably including the replacement request and

- sending the acknowledgement to the sender.

Optionally, the sender performs:

- receiving from the token reference register the acknowledgement,
- storing the acknowledgement,
- sending to the receiver the token reference register acknowledgement,
- sending to the receiver the sender private key and an acknowledgement including at least the monetary value (v), and preferably the acknowledgement from the token reference register, including the replacement request, more preferably, the acknowledgement from the token reference register being a proof of payment, preferably comprising the acknowledgement of the token reference register, an acknowledgement signature, preferably being a digital signature by using a transmission private key of the sender, and at least one of i) transaction data, and ii) the monetary value;
- sending to the receiver the proof of payment, in particular comprising the acknowledgement, an acknowledgement signature, preferably being a digital signature by using a transmission private key of the sender, and at least one of i) transaction data, and ii) the monetary value, and at least one of i) transaction data, and ii) a combined token reference, and validating the authenticity and integrity of the acknowledgement of the token reference register.

The method ensures that the transaction cannot be tampered with, to enable a non-repudiable proof of transaction.

The token reference register may act as a trusted entity to validate the legitimacy of tokens in the system. By embedding it in the transaction protocol, it ensures that tokens used in transactions are genuine and not counterfeit or double used. This centralized validation mechanism adds integrity and trustworthiness to the entire transaction process.

The acknowledgement and the proof of payment serve as evidence of the legitimacy and validity of a token in a transaction. For participants in the transaction protocol, acknowledgement / proof acts as a guarantee of the token's authenticity, allowing them to trust the transaction.

According to an aspect of the invention, a non-transitory computer readable storage medium for tangibly storing computer program instructions capable of being executed by a processor is provided. The computer program instructions implement / execute the steps of the method described above.

Some effects and advantages relating to the secure token transaction unit, the terminal designed as a receiver, the terminal designed as a sender, the electronic payment token transaction system, the method for providing a non-repudiable payment transaction and the non-transitory computer readable storage medium are described as follows.

The entities of the present invention are secure entities. The term "secure" can be explained by means of some examples.

- The secure token transaction unit is designed to securely store tokens and perform secure transactions. It includes secure features such as a secure memory for safe data storage, contributing to the overall security of the system.
- The electronic payment system is secure based on the combined security measures of all its components, including secure token transaction units, terminals, and secure communication interfaces. It also includes security protocols to ensure transaction integrity and user privacy.
- The terminal, such as a smartphone, laptop, or stationary computer contributes to the security of the system through secure communication interfaces, and encrypted storage to reduce the risks associated with data manipulation or unauthorized access.

- The secure communication interface provides bi-directional data communication between the secure token transaction unit and the terminal. It can use secure communication protocols, such as Transport Layer Security (TLS), to ensure the secure transmission of sensitive data, minimizing the risk of data breaches.
- The secure memory of the token transaction unit or terminal stores data in an encrypted form, preventing unauthorized access or modification of the data. The secure storage and retrieval of token denominations and their respective values ensures the security of the system.

A secure communication interface of the transaction unit may be adapted to provide data from the transaction unit to the terminal and to obtain data from the terminal. In this context, "obtaining" and "providing" may refer to enabling data transfer from the terminal to the transaction unit (obtaining), and vice versa (providing). From the perspective of both the transaction unit and the terminal, the secure communication interface is adapted to enable data exchange between the transaction unit and the terminal. The terms "obtaining" and "providing" are used for data transfers via the communication interface, whereas the terms "sending" and "receiving" are used for data transfers via the communication module. In general, the control module is adapted to control the data transfers performed via both the communication interface and the communication module.

Preferably, the secure communication interface of the transaction unit is connected or connectable to the secure communication interface of the sender / receiver, thereby establishing a data connection between the transaction unit and the sender / receiver via the respective communication interfaces.

Preferably, the data transmitted to the service provider unit is either processed within the service provider unit and then further transmitted from the service provider unit to another service provider unit or is directly further transmitted. The service provider unit may be communicatively connectable or connected to another token transaction unit having similar and/or complementary features to the token transaction unit described herein. In particular, the communication between the service provider units may be provided via internet and/or wireless (mobile) communication.

In particular, secure communication interface may enable secure token transaction units to interact with service provider units in a secure manner, thereby enhancing data security during transactions. The benefit is enhanced system security, minimizing potential breaches during data exchange. Especially, the secure memory may maintain data integrity by protecting it from unauthorized access or modifications. The benefit is a robust system that can reliably store and retrieve data, increasing confidence in the system.

The concept of the invention based on the aspects described comprises several features, such as the dual key control mechanism, the token reference, the validation by the token reference register and the proof of validity, which are common to the specific aspects, and which are responsible for the effects and advantages of the concept. At least one of these features, described in more detail below, is common to all aspects of the invention, thereby linking the specific aspects to form a single general inventive concept.

The dual control mechanism concerns both the generation of specific cryptographic tools and the use of the tools. The generation process involves the creation of unique cryptographic key pairs and the formation of a combined public key, where public keys of receiver and sender is combined. The combined public key serves as a unique identifier for the dual key control mechanism and ensures the security and uniqueness of each transaction. By using the tools provided by the dual key control mechanism, transactions can be carried out and verified in a secure manner. For example, once the combined public key is generated, an input token reference can be switched or updated to the combined token reference within the token reference register. This switching process ensures that the transaction is associated with both parties involved and provides non-repudiable proof of the transaction. The combined token reference, together with acknowledgements or digital signatures, provide a secure and verifiable record of the transaction, ensuring its integrity and authenticity.

The dual key control mechanism allows a shared understanding to be established that cooperation between two parties is required for the successful completion of a secure electronic payment. This mechanism involves the creation of a combined public key by combining the public keys of two different entities. This divides the control of the associated monetary value between the two parties. The transaction can only proceed with the active participation of both entities, thereby enhancing security, reducing the risk of unauthorized access, and ensuring that transactions are tamper-proof and verifiable.

The use of a token reference implies the generation of a unique token for each transaction, the token comprising a combined public key and significant transaction data. The token reference allows a unique identifier to be provided for each transaction, ensuring that each operation is traceable and distinguishable from others. The token reference makes it easier to track and reference specific transactions, promoting efficient record-keeping and reducing ambiguity.

The token reference undergoes a verification process by an independent entity, the token reference register. Upon receiving a validation request from the sender, this entity verifies the authenticity of the token reference. On the one hand, this adds an extra layer of security to the legitimacy and non-repudiation of a transaction. On the other hand, by only confirming the transaction after successful verification, it acts as a barrier to fraudulent activity or potential tampering.

After validation, both the sender and receiver receive proof of the validity of the transaction, which is then stored by both parties. This creates a permanent, verifiable record of the transaction. This record acts as a shield against potential disputes and ensures that both parties have an undeniable reference to the transaction, contributing to the non-repudiation of a transaction and/or promoting accountability and transparency in the transactional relationship.

Advantageous embodiments of the invention are described subsequently. Any embodiment or feature thereof may be combined with any aspect of the invention and/or other embodiment, provided this is technically useful and/or permissible. For example, features shown or described as part of one embodiment may be used in or in conjunction with another embodiment to provide a further embodiment.

In one embodiment, the dual key control mechanism may comprise generating an acknowledgement on the combined token reference, the acknowledgement preferably comprising i) transaction data such as at least one of transaction ID, reference number, timestamp, and/or ii) a digital signature on the initial token reference, and/or the replacement request. This provides enhanced security and traceability for transactions and ensures that both parties have non-repudiable proof of the occurrence and details of the transaction, thereby reducing the risk of fraud or dispute.

In one embodiment, the dual key control mechanism may comprise generating a digital signature over the combined token reference by means of the sender private key and/or via the communication interface providing the digital signature of the combined token reference. This provides a robust verification mechanism that confirms the authenticity and integrity of the transaction.

In one embodiment, the dual key control mechanism may comprise obtaining, via the communication interface, transaction data comprising at least one of a transfer ID, a sender wallet ID, a receiver wallet ID, and a timestamp. This allows participants in the transaction system to track and verify the sequence and parties involved in the transaction, thereby promoting transparency.

In one embodiment, the dual key control mechanism may comprise generating a combined token reference, preferably comprising the monetary value, the combined public key and optionally the transaction data, and digitally signing the combined token reference using the sender private key or a transmission sender private key. This allows a complete, tamper-proof record to be achieved, thereby ensuring the integrity and verifiability of the entire transaction.

In one embodiment, the control module of the receiver may be adapted to, for each payment transaction via the communication module, receive from the sender a proof of payment, preferably comprising the acknowledgement of the token reference register, an acknowledgement signature and at least one of i) transaction data and ii) the combined token reference, and validate the authenticity and integrity of the acknowledgement of the token reference register. This ensures that each transaction is supported by verifiable evidence and that all payment details are genuine, thereby minimizing potential disputes.

In one embodiment, the validation of the authenticity and integrity of the acknowledgement may be performed by verifying the acknowledgement signature using a public key of the token reference register, pre-distributed to participants of the electronic payment transaction system, and/or of the sender and/or of the receiver. This enhances the security and credibility of the transaction by ensuring that acknowledgements are consistently verified against a known and trusted source.

In one embodiment, for each payment transaction, an acknowledgement may comprise i) the combined token reference and/or transaction data including one of a transaction ID and a timestamp. This provides both parties with a record of the transaction, thereby enhancing transparency and mutual assurance in the process.

In one embodiment, the sender and the receiver may integrate with the PKI system of the transaction system to authenticate the certificate association with the sender and receiver by verifying a certificate chain and an issuer ID in a certificate serial number, thereby increasing the security of the transaction by ensuring the legitimacy of the sender certificate in the payment protocol. The use of a robust external authentication system ensures that the sender's certificate is valid and traceable.

In one embodiment, for each payment transaction, receiving from the token reference register via the communication module an acknowledgement confirms that the token reference register has replaced the input token reference with the combined token reference (as output token reference of the replacement request) in its records, and sending the acknowledgement, e.g. including the replacement request, to the receiver via the communication module and/or storing the acknowledgement. This ensures a consistent record between the sender and the token reference register, which increases transparency and trust between the transaction parties and allows an auditable trail to be established.

In one embodiment, for each payment transaction, there is a sending of a proof of payment, preferably comprising the acknowledgement of the token reference register, an acknowledgement signature and at least one of i) transaction data and ii) monetary value. This proof, comprising acknowledgement and transaction data, assures the receiver of the true intent of the sender and the legitimacy of the transaction, thereby minimizing misunderstandings or potential disputes.

In one embodiment, for each payment transaction, there is an obtaining of a sender private key via a communication interface. This ensures mutual participation in the finalization of the transaction, thereby increasing the security of the transaction and reinforcing the collaborative aspect of the transaction process.

Further advantages and features of the present disclosure are apparent from the dependent claims, the description, and the accompanying drawings.

So that the way the above recited features of the present disclosure can be understood in detail, a more particular description of the present disclosure, briefly summarized above, may be had by reference to typical embodiments. The accompanying drawings relate to embodiments of the present disclosure and are described in the following:

Fig. 1 shows a secure electronic payment transaction system for token transactions with secure transaction units of the prior art;

Fig. 2 shows a symbol diagram of a secure token transaction unit within an electronic payment transaction system according to the invention;

Figs. 3a, b each show a symbol diagram of a service provider unit designed as a payment transaction receiver or sender within an electronic payment transaction system according to the invention;

Figs. 4a, b each show a symbol diagram of an electronic payment transaction system according to the invention;

Figs. 4c shows a symbol diagram of a token reference register according to the invention;

Fig. 5 shows a symbol diagram of the method of providing a non-repudiable payment transaction between participants in an electronic payment transaction system according to the invention.

Reference will now be made in detail to the various embodiments, one or more examples of which are illustrated in each figure. Any embodiment may be combined with any other embodiment, if technically reasonable and/or allowed. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any embodiment. Instead, any aspect or embodiment described herein can be combined with any other aspect or embodiment described herein unless specified otherwise.

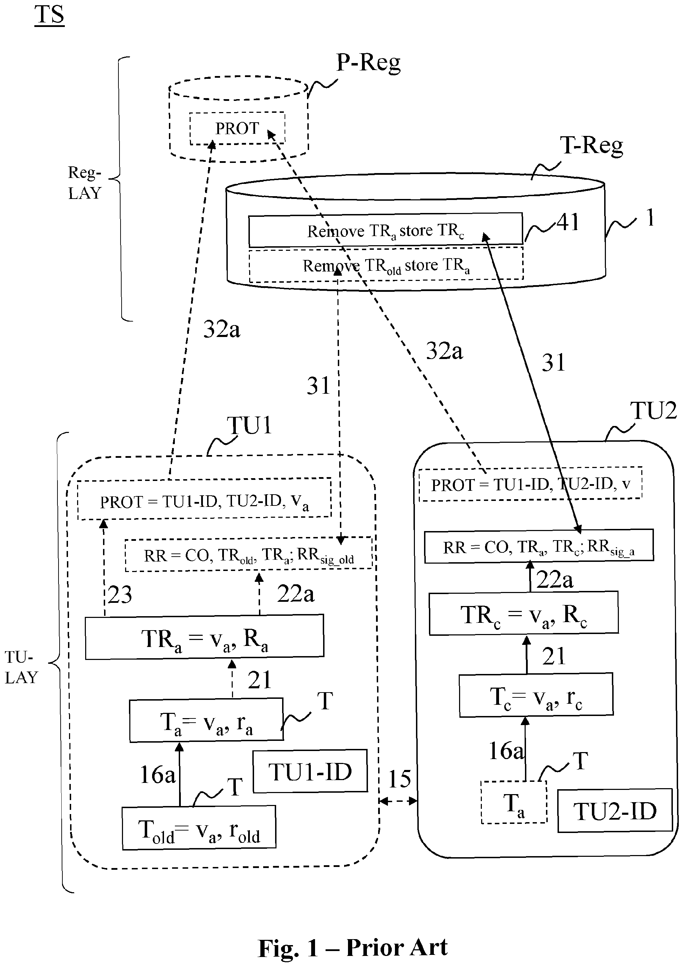

Fig. 1 shows an example of a secure electronic token transaction system TS with secure transaction units TU according to the prior art. The secure electronic token transaction system TS of Fig. 1, e.g., a payment transaction system, corresponds with the third approach as indicated above. The transaction system TS comprises a register layer Reg-LAY in which a token reference register T-Reg is arranged. The TS further comprises a direct transaction layer TU-LAY in which a plurality of transaction units TU may be provided, as an example, two transaction units TU1 and TU2 are shown in Fig. 1. TU1 and the TU2 have control means configured to generate replacement requests RR, also referred to as registration requests RR, that comprise modification-commands CO concerning a modification of a token, here $T_a$ of the secure transaction unit TU1 and $T_c$ of the secure transaction unit TU2.

The transaction units TU of the transaction system TS are arranged to exchange 15 tokens T directly with each other. In the case of Fig. 1, $T_{old}$, $T_a$ and $T_c$ are payment tokens, which are also referred to as digital coins, preferably CBDC. Each token T in the TS is generated by a transaction unit TU-I of a specific token issuer (not shown in Fig. 1).

Each token T can be modified, such as split, merged or switched, by applying modification-commands CO by each transaction unit TU.

Each token T can be generated by a transaction unit TUI of a token issuer and can also be deleted. A transaction unit TU-I of a token issuer is, for example, a commercial bank or a financial service provider unit FSP.

Modification-commands CO are compliant with the above described third approach and it is refrained from repeating these modifications here again. Each modification can be registered in the T-Reg by replacement requests (=registration requests) RR.

A token T, also referred to as value note, is uniquely represented by a monetary value v as well as a random number r. Thus, each token T in this TS has at least two token elements.

The monetary value v as a first mandatory token element can be specified in a range of values from 1 to $2^{31}-1$. The random number r may be a number in the range of 0 to $2^{256} - 1$, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

For each token T, a token reference TR can be stored in the token reference register T-Reg. The token reference TR comprises the monetary value v (of the token T) and a public key R that corresponds to the private key r of the token-individual key pair. The token reference TR of the token T can be viewed at any time in the register T-Reg of the transaction system TS.

TU1 is in possession of $T_{old}$ that comprises a monetary value $v_a$ as well as a random number $r_{old}$. TU1 switches $T_{old}$ to $T_a$ with a switch-modification in step 16a. $T_a$ comprises the monetary value $v_a$ (of the $T_{old}$) as well as a newly generated random number $r_a$. In step 21, the TU1 generates a $TR_a$ that is uniquely assigned to the $T_a$.

This token reference $TR_a$ can be sent 31 to the token reference register T-Reg in form of a registration request RR by the TU1 (being generated in step 22a), if necessary, together with a command CO.

Additionally, the registration request RR is signed with the private key $r_{old}$. Signing makes it possible to verify that TU1 is in possession/knowledge of the token $T_{old}$, further enhancing security in the transaction system TS.

The registration request RR generated 22a in TU1 relating to a switch-modification in Fig. 1 includes the modification command CO, the output token references $TR_a$ of token $T_a$ to be registered and the input token reference $TR_{old}$ of the token $T_{old}$ to be removed from the token reference register T-Reg. The registration request RR also comprises a signed registration request $RR_{sig\_old}$, which is the RR that is signed with the private part $r_{old}$ of the token $T_{old}$.

This RR may be sent to T-Reg in step 31 to register $TR_a$ in the T-Reg. Every TU in the TS that receives the token $T_a$ from TU1 can now verify whether

$T_a$ is a valid token T in the TS.

The token $T_a$ (and maybe also $TR_a$ and/or the RR e.g., as a proof) may be transmitted 15 from TU1 to TU2, e.g., when performing a token transaction, such as a payment transaction. TU2 now performs a switch-modification to switch the token $T_a$ from TU1 to become a token $T_c$ of TU2. Therefore, a new random number $r_c$ is generated at TU2 in step 16a. However, $v_a$ remains the same token element also in the new $T_c$. A token reference $TR_c$ is generated based on $T_c$ in step 21 by TU2. Since $v_a$ is not changed, no money has been generated or deleted.

This token reference $TR_c$ can be sent 31 to T-Reg as another registration request RR by the TU2 (being generated in step 22a), together with a command CO.

Additionally, the RR is signed with the private key $r_a$. Signing makes it possible to verify that TU2 is in possession of the (old) token $T_a$, further enhancing security in the TS.

The registration request RR generated 22a in TU2 relating to the switch-modification includes the switch-modification command CO, one output token reference $TR_c$ of a token $T_c$ to be registered and one input token reference $TR_a$ of the token $T_a$ to be removed from the token reference register T-Reg. The registration request $RR_s$ also comprises a signed registration request $RR_{sig\_a}$, which is the RR that is signed with the private part $r_a$ of the token $T_a$.

Each TU may store the RR as a so-called PROOF in case, no data connection to the T-Reg is available or is not desired, e.g., in an offline token transaction.

RR are sent 31 to the T-Reg. RR is received in the T-Reg. After RR has been checked by the T-Reg, the $TR_a$ is removed from the T-Reg and $TR_c$ is stored in the T-Reg in step 41. The $TR_c$ replaces the $TR_a$ so, the RR can also be referred to as replacement request. With storing the $TR_c$, the token $T_c$ is registered in the TS.

Each TR is uniquely assigned to a T in the TS and the TR is used to register T in the TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

T may be stored, for example, in a secure wallet, as the TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

The T-Reg is a unit within the transaction system TS and is either a central register or database of the transaction system TS or a decentralized register or database (DLT) of the transaction system TS.

The public part R of the token individual key pair (as part of the TR) is generated by applying a cryptographic function to the private part r of the token individual key pair. This function is difficult to reverse and thus provides the transaction system TS with the required security. It holds that $R = r * G$, where G can be, for example, a global parameter of the transaction system TS, e.g., a generator points of an elliptic curve, here the secp256r1 curve. Any other suitable cryptographic function to receive the R value can be applied as well.

The subject name of a hardware TU (smart card) and a hosted TU (within a Service Provider Unit (not shown in Fig. 1)) may be the TU-ID. The TU-ID may need to fulfil some or all the following criteria:

The TU-ID may need to convey if it is a wallet certificate, or CA certificate or admin-CA end-entity certificate. The TU-ID may need to be small to be transferred and stored in a hardware wallet, e.g., a smart card. The TU-ID may need to fit into the subject field of a certificate, e.g., a length of 16 bytes should not be exceeded. The TU-ID may need to remain stable across changes to certificates. The TU-ID may need to contain information about an SPU, e.g., a financial service provider unit, FSP, that issued the TU, so that the token transaction processors can use to route data to other token transaction processors, e.g., to find the IP address of the token transaction processor.

The TU-ID should contain an identifier of the central bank (not shown in Fig. 1) to allow cross-currency transfers (=multi-currency transactions or multi-currency transaction systems). The TU-ID may need to contain an identifier within the FSP.

TU1 comprises a secure token transaction unit identifier TU1-ID. TU1-ID uniquely assigns the TU1 of the user within the TS. TU2 comprises a secure token transaction unit identifier TU2-ID. TU2-ID uniquely assigns the TU2 of the user within the TS.

In the transaction system TS, there may also be a protocol data register P-Reg. This P-Reg stores protocol data PROT that are generated in step 23 by each transaction unit TU after a transaction has been made. The PROT may include the TU1-ID, the TU2-ID and one or more token elements of the token T that is part of the token transfer 15. It can be defined that either the sender (TU1) or the receiver (TU2) or both generate the PROT in respective steps 23 and provide the PROT to the P-Reg in step 32a. This P-Reg is considered as a pure protocol unit and should not contain any token element of tokens T on which basis, the P-Reg would be in the position of the token T. In other words, the random number r (or the private key r) of each token T is not part of the PROT. However, the monetary value v of each token T may be part of the PROT to protocol the amount of monetary value v being transferred between TU1 and TU2.

This prior art concept has a conceptual flaw, wherein a malevolent receiver a token, here TU2, dispute receipt of a token transfer in step 15 and the benevolent sender, here TU1, cannot prove otherwise.

The situation may arise when the token receiver TU2 is able to interrupt a communication of the token sender TU1 with a token reference register T-Reg. For instance, following scenario is possible:

1. The benevolent token receiver TU2 requests a token T for receiving a monetary value v from a malevolent token sender TU1. TU1 creates T (r, v), generates a corresponding TR (R, v) in step 22a and transmits TR to TU2.

2. TU2 carries out all necessary steps and prepares a replacement request RR, e.g., with the command CO, e.g. a SWITCH or a SPLIT modification to obtain ownership of the T by registering TR.

3. Therefore, TU2 creates and signs the RR in step 22a and sends it in step 31 to the T-Reg. T-Reg executes the RR and registers TR in the T-Reg, but before sending an acknowledgment of the successful registration of the TR in the T-Reg, the communication between TU2 and T-Reg is interrupted by TU1 (as an attack scenario) or a random network connection failure occurs.

4. TU1 now knows (or at least can speculate) that TU2 has correctly issued an RR in step 22a and sent it in step 31, which means that TU1 is the owner of an active token (r, v) with monetary value v. TU2 cannot prove a successful execution of the RR since the T-Reg acknowledgement has not reached TU2.

5. TU1 (quickly) executes a further modification, e.g., a SPLIT command from the active token T (r, v) to a new token $T_{new}$ ($r_{new}$, v). The corresponding new token reference $TR_{new}$ is then sent by TU2 to the T-Reg in step 31.

6. TU2 at some point will regain connectivity with the T-Reg and repeats the registration of the former TR by again sending the RR to the T-Reg in step 31. T-Reg will now reject this RR, because in the meantime, TU1 has registered $TR_{new}$, and the TR (and its corresponding T) is not valid anymore.

Note, that this scenario also arises due to random network failures, but it does require TU1 prematurely SWITCH-ing the token T without giving TU2 the chance that the T-Reg acknowledges the SWITCH.

In the non-malevolent case, this may still lead to payment processors getting stuck in an error state. Consequently, TU1 has spent the (correctly) received T. However, TU1 can simultaneously claim to never have received T, and TU2 is unable to convince anyone that they have followed the protocol.

The concept of the invention addresses an issue related to non-repudiation in interbank transfers. Non-repudiation refers to the ability of the sender to provide indisputable proof of payment in the event of a dispute. The problem at hand is that in the known protocol, when money is transferred between two participants within the TS, there is no provision for the sender to retain proof of payment. This is due to an oversight in the design of the known protocol and its failure to consider garbage collection on the token reference register.

The concept proposes a solution where the receiver of a transfer signs the token reference, allowing the sender to later prove the correct destination of the transfer. It also addresses the risk of a malicious receiver exploiting the money before the sender stores the proof by splitting the process of validating the key of the target token reference into two parts, each generated by the sender and the receiver. The sender transfers money to the token reference with the combined public key, and only after storing the proof does the sender share his half of the private key.

The concept also preserves the privacy of the proof of payment and does not reveal the sender's wallet balance. To achieve this, a mechanism is provided to generate a proof for one of the split targets without revealing information about other values used in the split.

To ensure security, messages exchanged in this process are signed, providing an additional guarantee against unauthorized changes. The receiver is required to sign the public key with a transmission private key that identifies itself and that the sender can verify.

The concept also provides for the retrieval of a proof of payment. This proof contains various data points such as the transfer ID, transaction amount, sender wallet ID, recipient wallet ID, the public part of the generated key pair, a signature of the data using the respective transmission private key, and the proof of the validity of the value note from the token reference register.

The cryptographic operations used in this approach are robust and secure against possible attacks. For example, even if an attacker intercepts the connection and steals one key, he will not be able to find the other.

To solve the above identified problem, the following steps are performed:

- sender TU1 generates private key r1 and public key R1.
- receiver TU2 generates private key r2 and public key R2.

- TU1 performs a replacement request, e.g. using a SWITCH or SPLIT operation on the combined public keys R1 + R2.

The public key R can be calculated without knowing the value of r1 using the one-way function

$$R = R1 + R2 = R1 + G \cdot r2$$

where

- R are the combined public key,
- R1, R2 are the public keys of TU1 and TU2,
- r1, r2 are the private keys of TU1 or TU2, and
- G is an elliptic curve generator point in Elliptic Curve Cryptography (ECC) used to obtain a public key R from a private key r. The generator point can be a predefined point on the curve that is used to generate other points on the curve. Multiplying the generator point G by an integer can produce another point on the curve.

Accordingly, neither party may have access to the combined token reference TR (R, v) without agreement from the other party since the final combined private key r is the sum (addition or concatenation) of the contributions of both parties R1 and R2 and neither party knows the private key r of the other transmission party (participant).

Sender TU1 can prove that he has correctly executed the transaction by revealing his private key r1 together with the acknowledgement from the token reference register T-Reg. This means that the proof can be verified by computing the combined public key R and verifying it with the acknowledgement from the token reference register. The acknowledgement may additionally be digitally signed using a token reference register private key.

Receiver TU1 can access and use the funds by computing the combined private key r'=r1+r2 for the combined token reference TR$_{comb}$. The equation above allows TU1 to create the combined private key r' for the token T by adding the private key r1 to the private key r2 obtained from TU2 only after the acknowledgement has been received at TU2 from the T-Reg.

The solution may ensure non-repudiation by generating combined keys, and by integrating the token reference register in the verification and authentication process. The combined private keys can only be used when both parts come together, ensuring that neither party can act maliciously without the other party being able to prove the transaction.

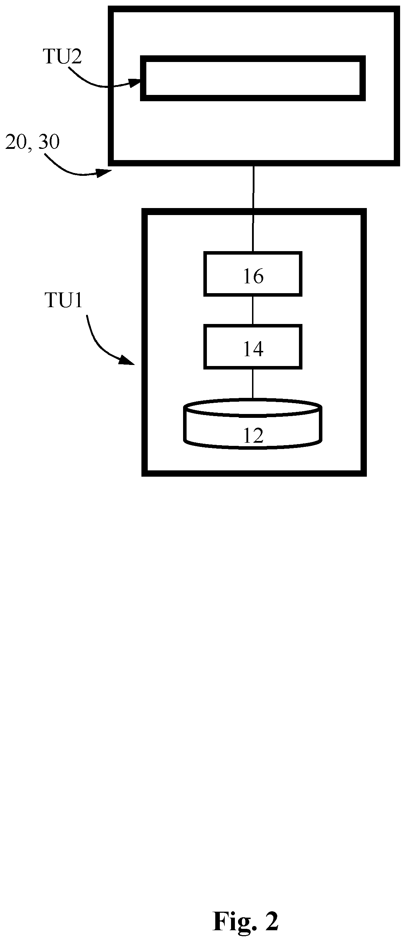

Fig. 2 shows an exemplary embodiment of a secure token transaction unit TU1 within an electronic payment transaction system TS (not shown in this figure). The secure token transaction unit TU1 may be a hosted wallet.

The token transaction unit TU1 may be hosted within a service provider unit (or terminal) 20, 30 by means of which the token transaction unit TU1 is in an operative state, and to a second transaction unit TU2 of the electronic payment transaction system TS. The secure token transaction unit TU1 may comprise a secure memory 12 for storing data; a secure communication interface 16 adapted to provide data to the service provider unit (or terminal) 20, 30 and to obtain data from the service provider unit (or terminal) 20, 30; and an optional control module 14, such as a processor, a microprocessor, or a microcontroller.

The secure memory 12, the communication interface 16 and the control module 14 is obsolete, if TU1 is a software application that is executable in a runtime environment of the service provider unit (or terminal) 20, 30.

The TU1 is adapted to perform a dual key control mechanism comprising:

a) generating a unique cryptographic key pair (r1, R1) comprising a private key (r1) and a public key (R1), preferably by means of a random number generator,

b) receiving a public key (R2) from the second transaction unit TU2,

c) generating a replacement request RR including an input token reference TR0 (v, R0) uniquely assigned to a token T0 of TU1 and a combined token reference TR$_{comb}$ (v, R') as an output token reference TR$_{out}$, wherein TR$_{comb}$ ) includes a combined public key R' = R1 + R2, wherein the public key R' is a combination of the public key R1 of TU1 and the public key R2 from TU2, preferably the public key R2 received from the second transaction unit TU2 being digitally signed using a transmission private key of the second transaction unit TU2, and

d) providing the RR having the TR$_{comb}$ (v, R') to the T-Reg.

The dual key control mechanism thereby enhancing the security that the transaction cannot be tampered with, to enable a non-repudiable proof of transaction.

The mechanism implemented by the TU1 can thus contribute to the implementation of the dual key control mechanism and use the powerful signature verification based on this mechanism to provide enhanced security that the transaction cannot be tampered with to provide non-repudiable proof of the transaction.

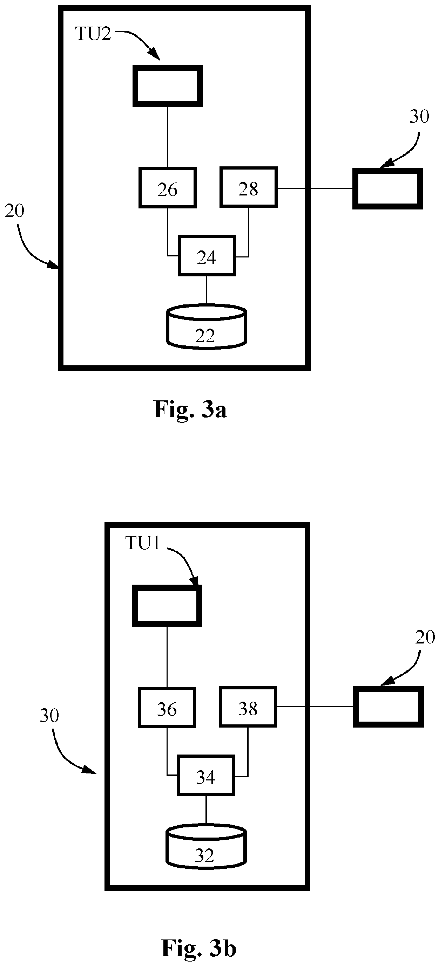

Fig. 3a shows an exemplary embodiment of a service provider unit (or terminal) 20 designed to host a TU2 as a payment transaction receiver within an electronic payment transaction system TS (not shown in this figure) comprising the token reference register T-Reg and at least one transaction unit TU2, to which the 20 is connected or connectable. Fig. 3a also shows one service provider unit (or terminal) 3 designed to host a TU1 as a payment transaction sender of payment transactions.

The service provider unit (or terminal) 20 designed to host a TU2 as a payment transaction receiver may comprise a secure communication interface 26 connected or connectable to the transaction unit TU2 and, in a connected state, adapted to provide data to the transaction unit TU2 and to obtain data from the transaction unit TU2; a communication module 28 communicatively connected or connectable to the sender 30; a secure memory 22; and a control module 24, such as a processor, a microprocessor, or a microcontroller.

The secure memory communication interface 26 may be obsolete, if TU2 is a software application that is executable in a runtime environment of the service provider unit (or terminal) 20, 30.

Fig. 3b shows an exemplary embodiment a service provider unit (or terminal) 30 designed to host a TU1 as a payment transaction sender within an electronic payment transaction system TS (not shown in this figure) comprising a token reference register T-Reg and at least one secure token transaction unit TU1, to which the service provider unit (or terminal) 30 is connected or connectable.

The service provider unit (or terminal) 30 may comprise a secure communication interface 36 connected or connectable to the transaction unit TU1 and, in a connected state, adapted to provide data to the transaction unit TU1 and to obtain data from the transaction unit TU1; a communication module 38 connected or connectable to the receiver 20; a secure memory 32; and a control module 34, such as a processor, a microprocessor, or a microcontroller.

The secure memory communication interface 36 may be obsolete, if TU1 is a software application that is executable in a runtime environment of the service provider unit (or terminal) 20, 30.

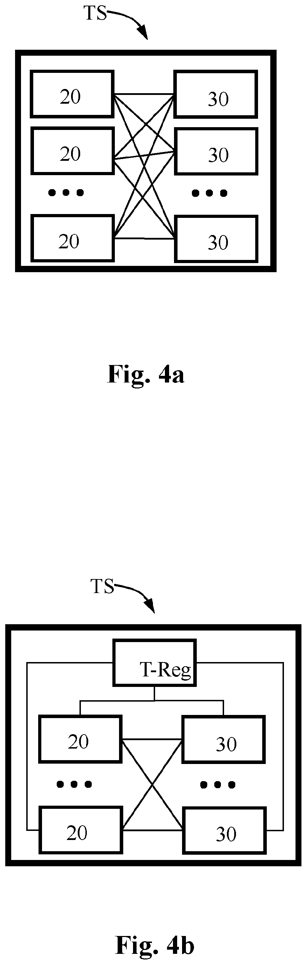

Fig. 4a shows an exemplary embodiment of an electronic payment transaction system TS. The electronic payment transaction system TS may comprise:

- at least one terminal 20 designed as a sender of payment transactions, and
- at least one terminal 30 designed as a receiver of payment transactions.

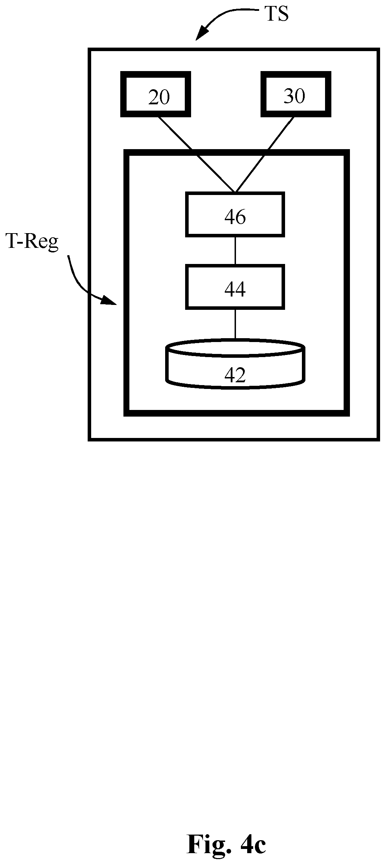

Fig. 4b shows an exemplary embodiment of an electronic payment transaction system TS comprising a token reference register T-Reg, and Fig. 4c shows the token reference register T-Reg of the electronic payment transaction system TS. The token reference register T-Reg may be communicatively connected to the at least one sender 30 and the at least one receiver 20 of the payment transaction system TS.

The token reference register T-Reg may comprise a secure memory 42, a communication module 48, a control module 44, such as a processor, a microprocessor, or a microcontroller.

The control module 44 may be adapted to perform via the communication module 48, receiving from the sender 30 a replacement request RR comprising a combined token reference $TR_{comb}$ (v, R'), storing the combined token reference $TR_{comb}$ (v, R') and, via the communication module 48, sending to the sender 30 an acknowledgement confirming that the input token reference TR0 (v, R0) has been replaced by the combined token reference $TR_{comb}$ (v, R'), thereby enhancing the security that the transaction cannot be tampered with, to enable a non-repudiable proof of transaction.

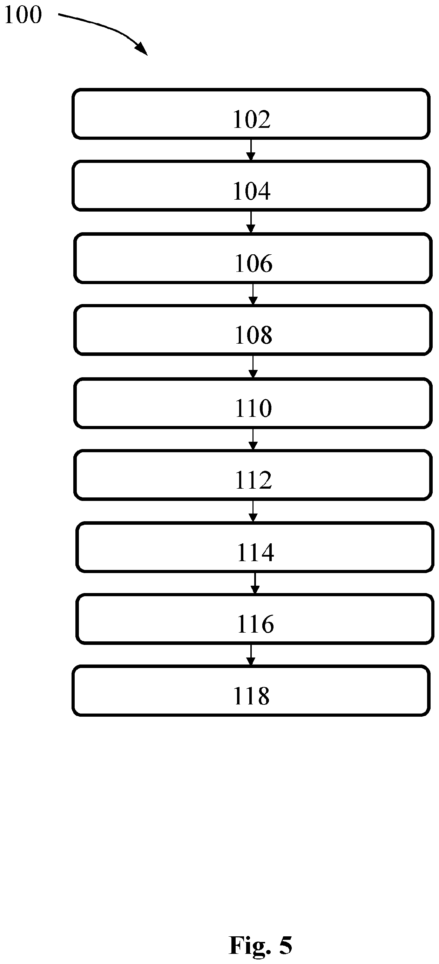

Fig. 5 shows a symbol diagram of the method 100 of providing a non-repudiable payment transaction between participants in an electronic payment transaction system TS according to the invention. The participants include at least one sender 30 and at least one receiver 20 of payment transactions.

The method 100 may comprise:

sender 30:

- generating 102 a sender key pair r1, R1 comprising a sender private key r1 and a sender public key R1;

receiver 20:

- generating 104 a receiver key pair r2, R2 comprising a receiver private key r2 and a receiver public key R2, and
- sending 106 to the sender 30 the receiver public key R2;

sender 30:

- generating 108 a replacement request RR including an input token reference TR0 (v, R0) uniquely assigned to a token T0 of the TU1 and a combined token reference $TR_{comb}$ (v, R') as an output token reference, wherein the combined token reference $TR_{comb}$ (v, R') includes the monetary value (v) and a combined public key R' = R1 + R2, and
- sending 110 the combined token reference (v, R') to the token reference register T-Reg;

token reference register T-Reg:

- verifying 112 the input token reference TR0 (v, R0) and, in case of a positive verification result,
- replacing 114 the input token reference TR0 (v, R0) in the T-Reg by the combined token reference $TR_{comb}$ (v, R'),
- generating 116 an acknowledgement, preferably including the replacement request RR, and
- sending 118 the acknowledgement to the sender,

thereby ensuring that the transaction cannot be tampered with, to enable a non-repudiable proof of transaction,

In this document, the terms "sender" and "terminal designed as a sender" on the one hand and the terms "receiver" and "terminal designed as a receiver" on the other hand are used interchangeably/ synonymously.

Reference signs

| | |
|---|---|
| TS | Electronic (payment) transaction system |
| TU | Transaction unit in TS, wallet |
| SPU | (Financial) service provider unit |
| | S retarded token storage |
| | TU-E transaction unit extension |
| | TU-E-ID transaction unit extension identifier |
| SPU-ID | Identifier of SPU |
| LUS | Look-Up-Service |
| TU-ID | Identification of TU, Wallet-ID |
| Key-S | Key repository |
| TSP | Trusted Service Provider Unit |
| TSP-ID | TSP-Identifier |
| TSP-S | TSP-Storage |
| TU-I$_{root}$ | Root token Issuer unit |
| T-Reg | Token reference register |
| 1 | Storage unit |
| P-Reg | Protocol data register |
| PROT | Protocol data |
| Reg-LAY | Registration layer |
| TU-LAY | Token transfer layer |
| RR | Registration request, replacement request |
| T | Token |
| encT | Encrypted T |
| TR | Token reference |
| v | Monetary value of T |
| R | public key of token-individual key pair |
| CO | Command |
| sig | Signature |
| R | Public Key of key pair |
| r | Secret, private key of token-individual key pair |
| 15 | transfer of token |
| 16a | Modify token |
| 21 | Generate token reference |
| 22a | Generate RR |
| 23 | Generate PROT |
| 31 | registration request, replacement request RR |
| 32a | protocol data transfer |
| 12 | secure memory of the transaction unit |
| 14 | control module of the transaction unit |
| 16 | secure communication interface of the transaction unit |
| 20 | service provider unit hosting the receiver TU |
| 22 | secure memory of 20 |
| 24 | control module of 20 |
| 26 | secure communication interface of 20 |
| 28 | communication module of 20 |
| 30 | terminal designed as a payment transaction sender |
| 32 | secure memory of the sender |
| 34 | control module of the sender |
| 36 | secure communication interface of the sender |
| 38 | communication module of the sender |
| 42 | secure memory of the token reference register |
| 44 | control module of the token reference register |
| 46 | secure communication interface of the token reference register |
| 48 | control module of the token reference register |
| 100 | method of providing a non-repudiable payment transaction |
| 102 | sender: generating a sender key pair (r2, R2) |
| 104 | receiver: generating a receiver key pair (r1, R1) |
| 106 | receiver: sending to the sender the receiver public key (R1) |
| 108 (v, R') | sender: switching an initial token reference (v, R0) to a combined token reference |
| 110 | sender: sending the combined token reference (v, R') to the token reference register |
| 112 | token reference register: verifying the initial token reference (v, R0) |
| 114 | token reference register: replacing the initial by the combined token reference |
| 116 | token reference register: generating an acknowledgement |
| 118 | token reference register: sending the acknowledgement to the sender |

**Claims**

1. A secure token transaction unit (TU1), such as a wallet, hosted within a service provider unit (SPU), within an electronic payment transaction system (TS) comprising a token reference register (T-Reg), the secure token transaction unit (TU1) configured to send a token (T) to another token transaction unit (TU2) within the electronic payment transaction system (TS), the secure token transaction unit (TU1) being adapted to perform a dual key control mechanism comprising:

    a) generating a unique cryptographic key pair (r1, R1) comprising a private key (r1) and a public key (R1), preferably by means of a random number generator,

b) receiving a public key (R2) from the other transaction unit (TU2),

c) generating a replacement request (RR) including an input token reference (v, R0) uniquely assigned to a token (T0) of the secure token transaction unit (TU1) and a combined token reference (v, R') as an output token reference (TR), wherein the combined token reference (v, R') includes a public key (R'), wherein the public key (R') is a combination of the public key (R1) generated by the secure token transaction unit (TU1) and the public key (R2) received from the other token transaction unit (TU2), and

d) providing the replacement request (RR) to the token reference register (T-Reg),

wherein the dual key control mechanism thereby enhancing the security that the payment transaction cannot be tampered with, to enable a non-repudiable proof of the payment transaction.

2. The secure token transaction unit (TU1) according to claim 1, wherein the public key (R2) received from the other transaction unit (TU2) is digitally signed using a transmission private key of the other transaction unit (TU2) or a transmission private key of a service provider unit (SPU).

3. The secure token transaction unit (TU1) according to claim 1 or 2, wherein the dual key control mechanism further comprises:

- receiving an acknowledgement from the token reference register (T-Reg) in case, the combined token reference (v, R') is registered within the token reference register (T-Reg) successfully, the acknowledgement preferably comprising i) transaction data such as at least one of transaction ID, reference number, timestamp, and/or ii) a digital signature on the combined token reference (v, R') and/or the replacement request (RR).

4. The secure token transaction unit (TU1) according to one of the preceding claims, wherein the dual key control mechanism further comprises:

- providing the private key (r1) to the second transaction unit (TU2), thereby enabling the second transaction unit (TU2) to generate a combined private key (r'=r1+r2) to control the monetary value (v) associated with the combined public key (R') via the combined token reference (v, R'); and/or

- generating a digital signature on the combined token reference (v, R') by means of the transmission private key of the secure token transaction unit (TU1), and/or via providing the digital signature of the combined token reference (v, R').

5. The secure token transaction unit (TU1) according to any of the preceding claims, wherein the dual key control mechanism further comprises:

- receiving transaction data comprising at least one of a transfer ID, sender wallet ID, recipient wallet ID, and timestamp; and/or
- generating the combined token reference (v, R'), preferably comprising the monetary value (v), the combined public key (R1, R2) and optionally the transaction data.

6. A secure token transaction unit (TU2), such as a wallet, hosted within a service provider unit (SPU), within an electronic payment transaction system (TS) comprising a token reference register (T-Reg), the secure token transaction unit (TU2) configured to receive a token (T) from another token transaction unit (TU1) within the electronic payment transaction system (TS), the secure token transaction unit (TU2) comprising a control module (14) adapted to perform a dual key control mechanism comprising:

a) generating a unique cryptographic key pair (r2, R2) comprising a private key (r2) and a public key (R2), preferably by means of a random number generator,

b) sending the public key (R2) to the other transaction unit (TU1),

c) receiving from the other secure token transaction unit (TU1), a token reference register acknowledgement confirming that the token reference register (T-Reg) has i) verified the authenticity and correctness of a combined token reference (v, R'), and ii) replaced an input token reference (v, R0) with the combined token reference (v, R') in its records, the acknowledgement serving as a non-repudiable proof of transaction.

7. The secure token transaction unit (TU2) according to claim 6, the dual key control mechanism further comprising:

d) receiving a private key (r1) from the other transaction unit (TU1) to enable generating a combined private key (r'), wherein the combined private key (r') is a combination of the private key (r2) generated by the secure token transaction unit (TU2) and the private key (r1) received from the other token transaction unit (TU1) to control the monetary value (v) associated with the combined token reference (v, R').

8. The secure token transaction unit (TU2) according to claim 6 or 7, wherein prior sending the public key (R2), the public key (R2) is digitally signed using a transmission private key of the other transaction unit (TU2) or a transmission private key of a service provider unit (SPU).

9. The secure token transaction unit (TU2) according to one of the claims 6 to 8, wherein the dual key control mechanism further comprises:
receiving from the other transaction unit (TU1) a proof of payment comprising the acknowledgement of the token reference register (T-Reg), an acknowledgement signature, preferably being a digital signature by using a transmission private key of the token transaction unit (TU1), and more preferably at least one of i) transaction data, and ii) the combined token reference (v, R'), and validating the authenticity and integrity of the acknowledgement of the token reference register (T-Reg), preferably by verifying the acknowledgement signature by means of a transmission public key of the other secure transaction unit (TU1).

10. A service provider unit (20) within an electronic payment transaction system (TS) configured to host a plurality of secure token transaction unit (TU1, TU2) according to one of the preceding claims, comprising:

- a communication module (28) communicatively connected or connectable to another service provider unit (30);
- a secure memory (22); and
- a control module (24), such as a processor, a microprocessor, or a microcontroller, adapted to perform for each payment transaction the dual key control mechanism

11. An electronic payment transaction system (TS) comprising

- at least one service provider unit (SPU) according to claim 10 and being designed as a sender (30) of payment transactions, and
- at least one service provider unit (SPU) according to claim 10 and being designed as a receiver (20) of payment transactions.

12. The electronic payment transaction system (TS) according to claim 11, wherein the transaction system (TS) further comprises a token reference register (T-Reg) communicatively connected or connectable to the sender (30) and/or the receiver (20), the token reference register (T-Reg) comprising:

- a secure memory (42);
- a communication module (48); and

- a control module (44), such as a processor, a microprocessor, or a microcontroller, connected to the secure memory (42) and the communication module (48), and adapted to perform:

via the communication module (48), receiving from the sender (30) a replacement request (RR) comprising a combined token reference (v, R'), and storing the combined token reference (v, R') and, via the communication module (48), sending to the sender (30) an acknowledgement confirming that an input token reference (v, R0) has been replaced by the combined token reference (v, R'),
thereby enhancing the security that the transaction cannot be tampered with, to enable a non-repudiable proof of transaction.

13. The electronic payment transaction system (TS) according to claim 12, wherein the control module (44) of the token reference register (T-Reg) is adapted to further perform: for each transaction, via the communication module (48), receiving from the sender (30) and the receiver, a signature public key for validating a digital signature of the replacement request (RR) and/or the combined public key.

14. A method (100) of providing a non-repudiable payment transaction between participants in an electronic payment transaction system (TS) comprising a token reference register (T-Reg), the participants including at least one sender (30), preferably a transaction unit (TU1) according to one of the claims 1 to 8 or a service provider unit (SPU) according to claim 10, and at least one receiver (20) of payment transactions, preferably a transaction unit (TU2) according to one of the claims 6 to 9 or a service provider unit (SPU) according to claim 10, the method (100) comprising:

- sender (30): generating (102) a sender key pair (r1, R1) comprising a sender private key (r1) and a sender public key (R1);
- receiver (20): generating (104) a receiver key pair (r2, R2) comprising a receiver private key (r2), preferably digitally signing the public key (R2) by using a transmission private key of the receiver (30); and a receiver public key (R2), and sending (106) to the sender (30) the receiver public key (R2);
- sender (30): generating (108) a replacement request (RR) including an input token reference (v, R0) uniquely assigned to a token (T0) of the token transaction unit (TU1) and a combined token reference (v, R') as an output token reference (TR), wherein the combined token reference (v, R') includes a combined public key (R'=R1+R2), and sending (110) the replacement request (RR) to the token reference register (T-REG); and

- token reference register (T-Reg): verifying (112) the input token reference (v, R0) and, in case of a positive verification result, replacing (114) the input token reference (v, R0) in the token reference register (T-Reg) by the combined token reference (v, R'), generating (116) an acknowledgement, preferably including the replacement request, and sending (118) the acknowledgement to the sender (30),

thereby ensuring that the transaction cannot be tampered with, to enable a non-repudiable proof of transaction,

wherein preferably the method further comprises:

- sender (30): receiving from the token reference register (T-Reg) the acknowledgement, storing the acknowledgement, sending to the receiver (20) the token reference register acknowledgement, sending to the receiver (20) the sender private key (r1) and an acknowledgement including at least the monetary value (v), preferably, the token reference register acknowledgement being a proof of payment, preferably comprising the acknowledgement of the token reference register (T-Reg), an acknowledgement signature, preferably being a digital signature by using a transmission private key of the sender (20), and at least one of i) transaction data, and ii) the monetary value (v).

15. A non-transitory computer readable storage medium for tangibly storing computer program instructions capable of being executed by a processor, the computer program instructions implementing the steps of the preceding method claim.

**Amended claims in accordance with Rule 137(2) EPC.**

1. A secure token transaction unit (TU1), such as a wallet, hosted within a service provider unit (SPU), within an electronic payment transaction system (TS) comprising a token reference register (T-Reg), the secure token transaction unit (TU1) configured to send a token (T) to another token transaction unit (TU2) within the electronic payment transaction system (TS), the secure token transaction unit (TU1) being adapted to perform a dual key control mechanism comprising:

a) generating a unique cryptographic key pair (r1, R1) comprising a private key (r1) and a public key (R1), preferably by means of a random number generator,

b) receiving a public key (R2) from the other token transaction unit (TU2),

c) generating a replacement request (RR) including an input token reference (v, R0) uniquely assigned to a token (T0) of the secure token transaction unit (TU1) and a combined token reference (v, R') as an output token reference (TR), wherein the combined token reference (v, R') includes a public key (R'), wherein the public key (R') is a combination of the public key (R1) generated by the secure token transaction unit (TU1) and the public key (R2) received from the other token transaction unit (TU2),

d) providing the replacement request (RR) to the token reference register (T-Reg),

wherein the dual key control mechanism enhances the security in that the payment transaction cannot be tampered with, to enable a non-repudiable proof of the payment transaction,

e) receiving an acknowledgement from the token reference register (T-Reg) in case, the combined token reference (v, R') is registered within the token reference register (T-Reg) successfully, and

f) storing the acknowledgement, the acknowledgement serving as a non-repudiable proof of transaction.

2. The secure token transaction unit (TU1) according to claim 1, wherein the public key (R2) received from the other token transaction unit (TU2) is digitally signed using a transmission private key of the other token transaction unit (TU2) or a transmission private key of a service provider unit (SPU).

3. The secure token transaction unit (TU1) according to claim 1 or 2, wherein the acknowledgement comprises i) transaction data such as at least one of transaction ID, reference number, timestamp, and/or ii) a digital signature on the combined token reference (v, R') and/or the replacement request (RR).

4. The secure token transaction unit (TU1) according to one of the preceding claims, wherein the dual key control mechanism further comprises:

- providing the private key (r1) to the other token transaction unit (TU2), thereby enabling the other token transaction unit (TU2) to generate a combined private key (r'=r1+r2) to control the monetary value (v) associated with the combined public key (R') via the combined token reference (v, R'); and/or
- generating a digital signature on the combined token reference (v, R') by means of the transmission private key of the secure token transaction unit (TU1), and/or via providing the digital signature of the combined token reference (v, R').

5. The secure token transaction unit (TU1) according to any of the preceding claims, wherein the dual key control mechanism further comprises:

- receiving transaction data comprising at least one of a transfer ID, sender wallet ID, recipient wallet ID, and timestamp; and/or
- generating the combined token reference (v, R'), preferably comprising the monetary value (v), the combined public key (R1, R2) and optionally the transaction data.

6. A secure token transaction unit (TU2), such as a wallet, hosted within a service provider unit (SPU), within an electronic payment transaction system (TS) comprising a token reference register (T-Reg), the secure token transaction unit (TU2) configured to receive a token (T) from another token transaction unit (TU1) within the electronic payment transaction system (TS), the secure token transaction unit (TU2) comprising a control module (14) adapted to perform a dual key control mechanism comprising:

a) generating a unique cryptographic key pair (r2, R2) comprising a private key (r2) and a public key (R2), preferably by means of a random number generator,
b) sending the public key (R2) to the other transaction unit (TU1),
c) receiving from the other secure token transaction unit (TU1), a token reference register acknowledgement confirming that the token reference register (T-Reg) has i) verified the authenticity and correctness of a combined token reference (v, R'), and ii) replaced an input token reference (v, R0) with the combined token reference (v, R') in its records, the acknowledgement serving as a non-repudiable proof of transaction, and
d) storing the acknowledgement.

7. The secure token transaction unit (TU2) according to claim 6, the dual key control mechanism further comprising:
d) receiving a private key (r1) from the other transaction unit (TU1) to enable generating a combined private key (r'), wherein the combined private key (r') is a combination of the private key (r2) generated by the secure token transaction unit (TU2) and the private key (r1) received from the other token transaction unit (TU1) to control the monetary value (v) associated with the combined token reference (v, R').

8. The secure token transaction unit (TU2) according to claim 6 or 7, wherein prior sending the public key (R2), the public key (R2) is digitally signed using a transmission private key of the other transaction unit (TU2) or a transmission private key of a service provider unit (SPU).

9. The secure token transaction unit (TU2) according to one of the claims 6 to 8, wherein the dual key control mechanism further comprises:
receiving from the other transaction unit (TU1) a proof of payment comprising the acknowledgement of the token reference register (T-Reg), an acknowledgement signature, preferably being a digital signature by using a transmission private key of the token transaction unit (TU1), and more preferably at least one of i) transaction data, and ii) the combined token reference (v, R'), and validating the authenticity and integrity of the acknowledgement of the token reference register (T-Reg), preferably by verifying the acknowledgement signature by means of a transmission public key of the other secure transaction unit (TU1).

10. A service provider unit (20) within an electronic payment transaction system (TS) configured to host a plurality of secure token transaction unit (TU1, TU2) according to one of the preceding claims, comprising:

- a communication module (28) communicatively connected or connectable to another service provider unit (30);
- a secure memory (22); and
- a control module (24), such as a processor, a microprocessor, or a microcontroller, adapted to perform for each payment transaction the dual key control mechanism

11. An electronic payment transaction system (TS) comprising

- at least one service provider unit (SPU) according to claim 10 and being designed as a sender (30) of payment transactions, and
- at least one service provider unit (SPU) according to claim 10 and being designed as a receiver (20) of payment transactions.

12. The electronic payment transaction system (TS) according to claim 11, wherein the transaction system (TS) further comprises a token reference register (T-Reg) communicatively connected or connectable to the sender (30) and/or the receiver (20), the token reference register (T-Reg) comprising:

- a secure memory (42);
- a communication module (48); and

- a control module (44), such as a processor, a microprocessor, or a microcontroller, connected to the secure memory (42) and the communication module (48), and adapted to perform:

via the communication module (48), receiving from the sender (30) a replacement request (RR) comprising a combined token reference (v, R'), and storing the combined token reference (v, R') and, via the communication module (48), sending to the sender (30) an acknowledgement confirming that an input token reference (v, R0) has been replaced by the combined token reference (v, R'),
thereby enhancing the security that the transaction cannot be tampered with, to enable a non-repudiable proof of transaction.

13. The electronic payment transaction system (TS) according to claim 12, wherein the control module (44) of the token reference register (T-Reg) is adapted to further perform: for each transaction, via the communication module (48), receiving from the sender (30) and the receiver, a signature public key for validating a digital signature of the replacement request (RR) and/or the combined public key.

14. A method (100) of providing a non-repudiable payment transaction between participants in an electronic payment transaction system (TS) comprising a token reference register (T-Reg), the participants including at least one sender (30), preferably a transaction unit (TU1) according to one of the claims 1 to 8 or a service provider unit (SPU) according to claim 10, and at least one receiver (20) of payment transactions, preferably a transaction unit (TU2) according to one of the claims 6 to 9 or a service provider unit (SPU) according to claim 10, the method (100) comprising:

- sender (30): generating (102) a sender key pair (r1, R1) comprising a sender private key (r1) and a sender public key (R1);
- receiver (20): generating (104) a receiver key pair (r2, R2) comprising a receiver private key (r2), preferably digitally signing the public key (R2) by using a transmission private key of the receiver (30); and a receiver public key (R2), and sending (106) to the sender (30) the receiver public key (R2);
- sender (30): generating (108) a replacement request (RR) including an input token reference (v, R0) uniquely assigned to a token (T0) of the token transaction unit (TU1) and a combined token reference (v, R') as an output token reference (TR), wherein the combined token reference (v, R') includes a combined public key (R'=R1+R2), and sending (110) the replacement request (RR) to the token reference register (T-REG); and
- token reference register (T-Reg): verifying (112) the input token reference (v, R0) and, in case of a positive verification result, replacing (114) the input token reference (v, R0) in the token reference register (T-Reg) by the combined token reference (v, R'), generating (116) an acknowledgement, preferably including the replacement request, and sending (118) the acknowledgement to the sender (30),
thereby ensuring that the transaction cannot be tampered with, to enable a non-repudiable proof of transaction,
wherein preferably the method further comprises:

- sender (30): receiving from the token reference register (T-Reg) the acknowledgement, storing the acknowledgement, sending to the receiver (20) the token reference register acknowledgement, sending to the receiver (20) the sender private key (r1) and an acknowledgement including at least the monetary value (v), preferably, the token reference register acknowledgement being a proof of payment, preferably comprising the acknowledgement of the token reference register (T-Reg), an acknowledgement signature, preferably being a digital signature by using a transmission private key of the sender (20), and at least one of i) transaction data, and ii) the monetary value (v).

15. A non-transitory computer readable storage medium for tangibly storing computer program instructions capable of being executed by a processor, the computer program instructions implementing the steps of the preceding method claim.

**Fig. 1 – Prior Art**

TU2

20, 30

TU1

16

14

12

**Fig. 2**

**Fig. 3a**

**Fig. 3b**

**Fig. 4a**

**Fig. 4b**

**Fig. 4c**

100

| 102 |
|---|

| 104 |

| 106 |

| 108 |

| 110 |

| 112 |

| 114 |

| 116 |

| 118 |

**Fig. 5**

Europäisches
Patentamt

European
Patent Office

Office européen
des brevets

# EUROPEAN SEARCH REPORT

**Application Number**

EP 23 21 1140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/405749 A1 (TARTAN CHLOE [GB] ET AL) 22 December 2022 (2022-12-22) * abstract; figures * * paragraphs [0037], [0044] – [0085] * | 1-15 | INV. G06Q20/06 G06Q20/36 G06Q20/38 H04L9/32 |
| A | EP 4 236 188 A2 (NCHAIN LICENSING AG [CH]) 30 August 2023 (2023-08-30) * abstract; figures * | 1-15 | |
| A | Anonymous: "How can the Diffie-Hellman key exchange be extended to three parties? – Cryptography Stack Exchange", , 30 August 2012 (2012-08-30), XP093147329, Retrieved from the Internet: URL:https://crypto.stackexchange.com/questions/3682/how-can-the-diffie-hellman-key-exchange-be-extended-to-three-parties [retrieved on 2024-04-03] * the whole document * | 1-15 | |
| A | WO 2022/238065 A1 (NCHAIN LICENSING AG [CH]) 17 November 2022 (2022-11-17) * abstract; figures * | 1-15 | **TECHNICAL FIELDS SEARCHED (IPC)** G06Q H04L |
| A | WO 2020/079534 A1 (NCHAIN HOLDINGS LTD [AG]) 23 April 2020 (2020-04-23) * abstract; figures * | 1-15 | |
| A | US 2020/295935 A1 (KAYAN YVES-LAURENT [LU] ET AL) 17 September 2020 (2020-09-17) * abstract; figures * | 1-15 | |
| A | US 2023/267426 A1 (SEIDEMANN WOLFRAM [DE] ET AL) 24 August 2023 (2023-08-24) * abstract; figures * * paragraphs [0199], [0200] * | 1-15 | |

The present search report has been drawn up for all claims

| Place of search | Date of completion of the search | Examiner |
|---|---|---|
| The Hague | 11 April 2024 | Breugelmans, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 23 21 1140

This annex lists the patent family members relating to the patent documents cited in  the above-mentioned European search report.
The members are as contained in the European Patent Office EDP file on
The European Patent Office is in no way liable for these particulars which are merely given for the purpose of information.

11-04-2024

| Patent document cited in search report | | | Publication date | Patent family member(s) | | Publication date |
|---|---|---|---|---|---|---|
| US 2022405749 | A1 | | 22-12-2022 | CN | 114631110 A | 14-06-2022 |
| | | | | EP | 4018401 A1 | 29-06-2022 |
| | | | | GB | 2587202 A | 24-03-2021 |
| | | | | JP | 2022548288 A | 17-11-2022 |
| | | | | US | 2022405749 A1 | 22-12-2022 |
| | | | | WO | 2021053426 A1 | 25-03-2021 |
| EP 4236188 | A2 | | 30-08-2023 | CN | 111971930 A | 20-11-2020 |
| | | | | EP | 3777023 A1 | 17-02-2021 |
| | | | | EP | 4236188 A2 | 30-08-2023 |
| | | | | JP | 7244537 B2 | 22-03-2023 |
| | | | | JP | 7451797 B2 | 18-03-2024 |
| | | | | JP | 2021520732 A | 19-08-2021 |
| | | | | JP | 2023071977 A | 23-05-2023 |
| | | | | KR | 20200141502 A | 18-12-2020 |
| | | | | SG | 11202008752T A | 29-10-2020 |
| | | | | TW | 201944757 A | 16-11-2019 |
| | | | | US | 2021150522 A1 | 20-05-2021 |
| | | | | WO | 2019197926 A1 | 17-10-2019 |
| WO 2022238065 | A1 | | 17-11-2022 | CN | 117280653 A | 22-12-2023 |
| | | | | EP | 4338367 A1 | 20-03-2024 |
| | | | | GB | 2606526 A | 16-11-2022 |
| | | | | WO | 2022238065 A1 | 17-11-2022 |
| WO 2020079534 | A1 | | 23-04-2020 | CN | 112970227 A | 15-06-2021 |
| | | | | EP | 3868054 A1 | 25-08-2021 |
| | | | | JP | 7383017 B2 | 17-11-2023 |
| | | | | JP | 2022504224 A | 13-01-2022 |
| | | | | JP | 2023184657 A | 28-12-2023 |
| | | | | KR | 20210074358 A | 21-06-2021 |
| | | | | SG | 11202103165Y A | 28-05-2021 |
| | | | | TW | 202036344 A | 01-10-2020 |
| | | | | US | 2021344510 A1 | 04-11-2021 |
| | | | | WO | 2020079534 A1 | 23-04-2020 |
| US 2020295935 | A1 | | 17-09-2020 | BR | 112020008368 A2 | 03-11-2020 |
| | | | | CN | 111480172 A | 31-07-2020 |
| | | | | EP | 3701462 A1 | 02-09-2020 |
| | | | | ES | 2914359 T3 | 09-06-2022 |
| | | | | JP | 2021500839 A | 07-01-2021 |
| | | | | LU | 100497 B1 | 08-05-2019 |
| | | | | RU | 2020117343 A | 29-11-2021 |
| | | | | US | 2020295935 A1 | 17-09-2020 |
| | | | | US | 2023027241 A1 | 26-01-2023 |
| | | | | WO | 2019081667 A1 | 02-05-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 21 1140

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | Publication date | Patent family member(s) | | Publication date |
|---|---|---|---|---|
| US 2023267426 A1 | 24-08-2023 | CN | 116057555 A | 02-05-2023 |
| | | DE 102020004122 A1 | | 13-01-2022 |
| | | EP | 4179486 A1 | 17-05-2023 |
| | | US | 2023267426 A1 | 24-08-2023 |
| | | WO | 2022008320 A1 | 13-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020212331 A1

- WO 2023036458 A1